# EUROPEAN PATENT APPLICATION

(11) **EP 4 425 674 A1**
(43) Date of publication of application: **04.09.2024**
(21) Application number: 22928117.5
(22) Date of filing: 30.06.2022
(51) Int. Cl.: H01M 50/342, H01M 50/10, H01M 50/244

(54) **BATTERY CELL, BATTERY, AND ELECTRICAL APPARATUS**

(30) Priority: 28.02.2022 WO PCT/CN2022/078375
(71) Applicant: Contemporary Amperex Technology Co., Limited, Ningde, Fujian 352100 (CN)
(72) Inventor: KE, Haibo, Ningde, Fujian 352100 (CN); LI, Quankun, Ningde, Fujian 352100 (CN); YANG, Kaihuan, Ningde, Fujian 352100 (CN); XING, Chengyou, Ningde, Fujian 352100 (CN); MEI, Xiang, Ningde, Fujian 352100 (CN); WANG, Peng, Ningde, Fujian 352100 (CN); LEI, Yuyong, Ningde, Fujian 352100 (CN)
(74) Representative: Gong, Jinping
(86) International application number: PCT/CN2022/103094
(87) International publication number: WO 2023/159847

(57) **Abstract**

The present application provides a battery cell, a battery, and an electrical apparatus, and belongs to the technical field of batteries. The battery cell comprises a housing, a pressure relief mechanism and a protective part. The housing is provided with a stepped hole communicated with the interior of the housing, the stepped hole comprises a first hole section and a second hole section which are arranged in a first direction, and the first hole section is located on the side of the second hole section facing away from the inside of the housing. The pressure relief mechanism and the protective part are respectively arranged in the second hole section and the first hole section, and the protective part covers at least a portion of the pressure relief mechanism. A battery cell with such a structure reduces the phenomenon of the protective part protruding out from the outer surface of the housing, which, on the one hand, protects the protective part, reducing the risks of friction or breakage of the protective part during the utilization process, helping the protective part protect the pressure relief mechanism and thus improving the service life and utilizational stability of the battery cell, and, on the other hand, reduces the amount by which the protective part increases the volume of the battery cell, thus reducing the amount of space occupied by the battery cell.

## Description

### Cross Reference to Related Applications

The present application claims the priority to International Application PCT/CN2022/078375 filed on February 28, 2022, and entitled "Battery Cell, Battery and Electrical Apparatus", the entire contents of which are incorporated herein by reference.

### Technical Field

The present application relates to the technical field of batteries, and in particular, to a battery cell, a battery and an electrical apparatus.

### Background Art

In recent years, new energy vehicles have developed by leaps and bounds. In the field of electric vehicles, power batteries, as the power source of the electric vehicles, play an irreplaceable and important role. With the vigorous promotion of new energy vehicles, the demand for power battery products is also increasing, wherein batteries, as the core components of new energy vehicles, have high requirements in terms of use safety. The battery cell of a battery is obtained by assembling a positive electrode plate, a negative electrode plate and a separator into an electrode assembly (bare cell) by means of winding or lamination, then placing it into a casing, covering the same with an end cover, and finally injecting an electrolytic solution, where a pressure relief component is provided on the casing or the end cover to release the internal pressure of the battery cell when the battery cell undergoes thermal runaway. However, the relief component of the battery cell in the prior art, when in use, has a problem of poor use stability, resulting in relatively poor use safety of the battery cell.

### Summary

Embodiments of the present application provide a battery cell, a battery and an electrical apparatus, which can effectively improve the use safety of the battery cell.

In a first aspect, embodiments of the present application provide a battery cell, including a housing, a pressure relief mechanism and a protective member, where the housing is provided with a stepped hole communicating with the inside of the housing, and the stepped hole includes a first hole section and a second hole section provided in a first direction and the first hole section is located at one side of the second hole section away from the inside of the housing; and the pressure relief mechanism and the protective member are provided in the second hole section and the first hole section respectively, and the protective member covers at least part of the pressure relief mechanism.

In the above technical solution, the housing is provided with a stepped hole for installing the pressure relief mechanism and the protective member, and the protective member and the pressure relief mechanism are provided respectively in the first hole section and the second hole section of the stepped hole which are provided in the first direction, and the first hole section is located at one side of the second hole section away from the inside of the housing, so that the protective member can cover at least part of the pressure relief mechanism to protect the pressure relief mechanism. The battery cell of this structure can reduce the phenomenon that the protective member protrudes from the outer surface of the housing, which, on the one hand, can better protect the protective member to reduce the risk of wear or damage of the protective member during use, facilitating the protective member protecting the pressure relief mechanism, further effectively prolonging the service life of the battery cell, and effectively improving the use stability and use safety of the battery cell, and on the other hand, can reduce the phenomenon that the protective member increases the volume of the battery cell, facilitating saving the space occupied by battery cell.

In some embodiments, the hole diameter of the first hole section is larger than the hole diameter of the second hole section.

In the above technical solution, by setting the hole diameter of the first hole section to be larger than the hole diameter of the second hole section, the stepped hole is in a structure in which the hole diameter gradually decreases in the first direction. For the battery cell using this structure, it is convenient to install the pressure relief mechanism in the second hole section from the outside of the housing during assembly process, and it is also convenient to install the protective member in the first hole section, facilitating reducing the assembly difficulty of the pressure relief mechanism and the protective member.

In some embodiments, the stepped hole further includes a third hole section, where the first hole section, the second hole section and the third hole section are arranged in the first direction, the hole diameter of the third hole section is smaller than the hole diameter of the second hole section, the pressure relief mechanism is provided in the second hole section and covers the third hole section, and the protective member is provided in the first hole section, and covers the second hole section.

In the above technical solution, the stepped hole is provided with at least three hole sections, that is, the first hole section, the second hole section and the third hole section arranged in the first direction. The pressure relief mechanism is provided in the second hole section and covers the third hole section, facilitating the pressure relief mechanism releasing the internal pressure of the battery cell, and improving the assembly stability and reliability of assembling the pressure relief mechanism into the stepped hole. In addition, by arranging the protective member in the first hole section to cover the second hole section, the protective member can cover the pressure relief mechanism as a whole, thereby better protecting the pressure relief mechanism.

In some embodiments, in the first direction, the depth of the first hole section is H₁, satisfying: 0.2mm≤H₁≤0.6mm.

In the above technical solution, by setting the depth of the first hole section between 0.2mm and 0.6mm, on the one hand, it can alleviate the phenomenon of great difficulty in assembling the protective member due to the too small depth of the first hole section, and on the other hand, It can alleviate the phenomenon of relatively high difficulty in processing the first hole section due to the too large depth of the first hole section, and can alleviate the phenomenon that more material needs to be squeezed and removed during the processing of the first hole section due to too large depth of the first hole section, which results in that the outer surface of the housing is partially bulged or partially squeezed to be extra wide during the processing of the first hole section.

In some embodiments, the cross-sectional area of the first hole section is S, where when 50mm²≤S≤700mm², 0.2mm≤H₁≤0.6mm; and when 700mm²≤S≤1500mm², 0.2mm≤H₁≤0.4mm.

In the above technical solution, when the cross-sectional area of the first hole section is between 50mm² and 700mm², the depth of the first hole section is set between 0.2mm and 0.6mm, and when the cross-sectional area of the first hole section is between 700mm² and 1500mm², the depth of the first hole section is set between 0.2mm and 0.4mm. That is, when the cross-sectional area of the first hole section is different, the depth of the first hole section needs to be cooperatively set in a different range to alleviate that more material needs to be squeezed and removed during the processing of the first hole section due to too large cross-sectional area of the first hole section and too large depth of the first hole section, facilitating reducing the phenomenon that the outer surface of the housing is partially bulged or partially squeezed to be extra wide during the processing of the first hole section.

In some embodiments, in the first direction, the depth of the second hole section is H₂, satisfying: 0.4mm≤ H₂≤0.8mm.

In the above technical solution, by setting the depth of the second hole section between 0.4mm and 0.8mm, on the one hand, it can alleviate the problem of relatively high assembly difficulty of the pressure relief mechanism and poor connection reliability of the pressure relief mechanism due to the too small depth of the second hole section, and on the other hand, can alleviate the phenomenon of increased processing difficulty of the second hole section due to the too large depth of the second hole section.

In some embodiments, in the first direction, the depth of the third hole section is H₃, satisfying: 0.3mm≤ H₃≤2mm.

In the above technical solution, by setting the depth of the third hole section between 0.3mm and 2mm, on the one hand, it can alleviate the phenomenon that due to the too small depth of the third hole section, the structural strength of the region used for supporting and assembling the pressure relief mechanism when the pressure relief mechanism covers the third hole section is relatively weak, and on the other hand, can alleviate the phenomenon of increased processing difficulty of the third hole section due to the too large depth of the third hole section.

In some embodiments, the first hole section, the second hole section and the third hole section are continuously provided in the first direction.

In the above technical solution, by arranging the first hole section, the second hole section and the third hole section continuously, it is conductive to further improving the manufacturability of the stepped hole, to reduce the processing difficulty of the stepped hole. In addition, the stepped hole using this structure may also be provided with more hole sections at one side of the third hole section in the first direction, which is conducive to further increasing the distance between the pressure relief mechanism and the inner surface wall of the housing, to reduce the risk that the vibration conditions or expansion of the electrode assembly of the battery cell causes impact or squeezing/pressing to the pressure relief mechanism.

In some embodiments, the stepped hole further includes a fourth hole section; and in the first direction, the fourth hole section is located between the first hole section and the second hole section, and the hole diameter of the fourth hole section is smaller than the hole diameter of the first hole section and larger than the hole diameter of the second hole section.

In the above technical solution, a fourth hole section is further provided between the first hole section and the second hole section in the first direction, so that the first hole section and the second hole section are separated by the fourth hole section, which is conducive to increasing the distance between the pressure relief mechanism and the protective member and further releasing the pressure inside the battery cell by the pressure relief mechanism, to ensure the normal use of the pressure relief mechanism.

In some embodiments, in the first direction, the depth of the fourth hole section is H₄, satisfying: 0.2mm≤ H₄≤0.4mm.

In the above solution, by setting the depth of the fourth hole section between 0.2mm and 0.4mm, on the one hand, it can alleviate the phenomenon that the distance between the pressure relief mechanism and the protective member is insufficient due to the too small depth of the fourth hole section, to ensure the normal use of the pressure relief mechanism, and on the other hand, can alleviate the phenomenon that the space occupied by the fourth hole section is too large due to the too large depth of the fourth hole section.

In some embodiments, the housing has a wall portion, the stepped hole is disposed on the wall portion, and the first hole section penetrates through an outer surface of the wall portion.

In the above technical solution, the housing has a wall portion for being provided with the stepped hole, and the first hole section of the stepped hole penetrates through the outer surface of the wall portion. That is to say, the first hole section is the hole section farthest from the inside of the housing in the hole sections of the stepped hole, i.e., the hole wall of the first hole section is connected to the outer surface of the wall portion. Such structure facilitates assembling the protective member, which is conductive to reducing the difficulty in assembling the protective member into the first hole section.

In some embodiments, the minimum distance from the hole wall of the first hole section to the edge of the wall portion is D₁, which satisfies D₁≥3mm.

In the above technical solution, by setting the minimum distance from the hole wall of the first hole section to the edge of the wall portion to be greater than or equal to 3 mm, it can alleviate the phenomenon of great processing difficulty of the first hole section due to the too small distance between the hole wall of the first hole section and the edge of the wall portion, facilitating processing of the first hole section of the stepped hole.

In some embodiments, the minimum distance from the hole wall of the hole section adjacent to the first hole section to the edge of the wall portion is D₂, which satisfies 0.5mm≤ D₂-D₁≤3mm.

In the above technical solution, by setting the difference between the minimum distance between the hole wall of the hole section adjacent to the first hole section to the edge of the wall portion and the minimum distance between the hole wall of the first hole section to the edge of the wall portion between 0.5mm and 3mm, on the one hand, it can alleviate the phenomenon that due to the too small difference, the processing difficulty of the first hole section is great and it is not convenient to assemble the protective member, and on the other hand, it can alleviate that more material needs to be squeezed and removed during the processing of the first hole section due to too large difference, thus alleviating the phenomenon that the outer surface of the wall portion is partially bulged or partially squeezed to be extra wide during the processing of the first hole section.

In some embodiments, the cross-sectional area of the first hole section is S, where when 50mm²≤S≤700mm², 0.5mm≤D₂-D₁≤3mm; and when 700mm²≤S≤1500mm², 0.5mm≤D₂-D₁≤1.5mm.

In the above technical solution, when the cross-sectional area of the first hole section is between 50mm² and 700mm², the difference between D₂ and D₁ is set between 0.5mm and 3mm, and when the cross-sectional area of the first hole section is between 700mm² and 1500mm², the difference between D₂ and D₁ is set between 0.5mm and 1.5mm. That is, when the cross-sectional area of the first hole section is different, the difference between D₂ and D₁ needs to be set cooperatively in a different range to alleviate that more material needs to be squeezed and removed during the processing of the first hole section due to too large cross-sectional area of the first hole section and too large difference between D₂ and D₁, thus facilitating reducing the phenomenon that the outer surface of the wall portion is partially bulged or partially squeezed to be extra wide.

In some embodiments, the wall portion includes a first edge, a second edge, a third edge and a fourth edge connected in sequence, where the first edge and the third edge are provided oppositely in the width direction of the wall portion, the second edge and the fourth edge are provided oppositely in the length direction of the wall portion, and any two of the width direction of the wall portion, the length direction of the wall portion and the first direction are perpendicular to each other; and the minimum distance from the hole wall of the first hole section to the first edge is D₁, and the minimum distance from the hole wall of the hole section adjacent to the first hole section to the first edge is D₂.

In the above technical solution, the wall portion has a first edge, a second edge, a third edge and a fourth edge connected in sequence, with two of them arranged opposite to the other two, to form a wall portion in a rectangular structure, so that the minimum distances from the hole wall of the first hole section and the hole wall of the hole section adjacent to the first hole section to the first edge of the wall portion in the width direction of the wall portion are D₁ and D₂. The wall portion in this structure facilitates processing and manufacturing of the stepped hole and is conductive to ensuring the manufacturing accuracy of stepped hole.

In some embodiments, the housing includes a casing and an end cover, where an accommodation space for accommodating an electrode assembly is formed inside the casing, one end of the casing is provided with an opening communicating with the accommodation space, the casing has the wall portion, and the stepped hole communicates with the accommodation space; and the end cover covers the opening.

In the above technical solution, the casing of the housing has a wall portion, that is, the stepped hole is provided on the casing, so that the pressure relief mechanism is installed on the casing. This structure facilitates the processing and manufacturing of the stepped hole, and is conductive to reducing the assembly difficulty between the pressure relief mechanism and the casing.

In some embodiments, the casing includes a bottom wall and a side wall; the side wall is provided surrounding the bottom wall, and one end of the side wall in the first direction define the opening, and the other end of the side wall opposite to the opening is connected to the bottom wall, wherein the wall portion is the bottom wall.

In the above technical solution, the bottom wall of the casing is the wall portion, that is, the stepped hole is provided on the bottom wall of the casing, to allow installing the pressure relief mechanism on the bottom wall of the casing. The battery in this structure, on the one hand, facilitates the battery cell releasing the pressure inside the housing through the pressure relief mechanism during use. On the other hand, in the battery with such battery cells, when multiple battery cells are stacked into groups, the phenomenon that the high-temperature gas released by the pressure relief mechanism impacts the adjacent battery cells can be alleviated by providing the pressure relief mechanism on the bottom wall of the casing, to reduce the mutual influence between the battery cells, which is conductive to improving the use safety of the battery.

In a second aspect, embodiments of the present application provide a battery, including a plurality of battery cells mentioned above.

In a third aspect, embodiments of the present application provide an electrical apparatus, including at least one battery mentioned above.

### Brief Description of Drawings

In order to more clearly illustrate the technical solutions of the embodiments of the present application, the drawings that are required to be used in the embodiments will be briefly introduced below. It should be understood that the following drawings only show some embodiments of the present application, and thus should not be regarded as a limitation on the scope, and those skilled in the art can also obtain other related drawings based on these drawings without paying creative work.
FIG. 1 is a schematic structural view of a vehicle provided in some embodiments of the present application;
FIG. 2 is a structural exploded view of a battery provided in some embodiments of the present application;
FIG. 3 is a structural exploded view of a battery cell provided in some embodiments of the present application;
FIG. 4 is a sectional view of a battery cell provided in some embodiments of the present application;
FIG. 5 is a local enlarged view of Part A of the battery cell shown in FIG. 4;
FIG. 6 is a schematic structural view of a casing of a battery cell provided in some embodiments of the present application;
FIG. 7 is a sectional view of a casing of a battery cell provided in some embodiments of the present application;
FIG. 8 is a local enlarged view of Part B of the casing shown in FIG. 7;
FIG. 9 is a bottom view of a casing provided in some embodiments of the present application;
FIG. 10 is a sectional view of a casing of a battery cell provided in yet some embodiments of the present application; and
FIG. 11 is a local enlarged view of Part C of the casing shown in FIG. 10.

Reference signs: 1000-vehicle; 100-battery; 10-box body; 11-first box body; 12-second box body; 20-battery cell; 21-housing; 211-stepped hole; 2111-first hole section; 2112-second hole section; 2113-third hole section; 2114-first connection surface; 2115-second connection surface; 2116-fourth hole section; 212-casing; 2121-accommodation space; 2122-opening; 2123-bottom wall; 2123a-first edge; 2123b-second edge; 2123c-third edge; 2123d-fourth edge; 2124-side wall; 213-end cover; 22-pressure relief mechanism; 23-protective member; 24-electrode assembly; 25-positive electrode terminal; 26-negative electrode terminal; 200-controller; 300-motor; X-first direction; Y-width direction of bottom wall; Z-length direction of bottom wall.

### Detailed Description of Embodiments

In order to make the purposes, technical solutions and advantages of the embodiments of the present application clearer, the technical solutions in the embodiments of the present application will be clearly described below in conjunction with the drawings in the embodiments of the present application. Obviously, the described embodiments are some, but not all of embodiments of the present application. Based on the embodiments in the present application, all other embodiments obtained by the person of ordinary skill in the art without paying creative efforts fall within the protection scope of the present application.

Unless otherwise defined, all technical and scientific terms used in the present application have the same meaning as commonly understood by those skilled in the technical field of the present application. The terms used in the description of the present application are only for the purpose of describing embodiments, and are not intended to limit the present application. Terms "comprising" and "having" and any variations thereof in the specification and claims of the present application and the above description of the drawings are intended to cover a non-exclusive inclusion. The terms "first", "second" and the like in the description and claims of the present application or the above drawings are used to distinguish different objects, rather than to describe a specific sequence or primary-subordinate relationship.

Reference made in the present application to "embodiment" means that a particular feature, structure, or characteristic described in connection with the embodiment may be included in at least one embodiment of the present application. The phases occurring in various places in the specification do not necessarily all refer to the same embodiment, nor separate or alternative embodiments mutually exclusive of other embodiments.

In the description of this application, it should be noted that, unless otherwise clearly specified and defined, the terms "installation", "link", "connection" and "attachment" should be understood in a broad sense. For example, it may be fixed connection, it may also be detachable connection or integral connection; it may be direct connection or indirect connection through an intermediary, or it may be internal communication between two components. Those of ordinary skill in the art may understand the specific meanings of the above terms in the present application according to specific situations.

The term "and/or" in the present application indicates only an association relationship describing associated objects, meaning that there may be three kinds of relationships. For example, A and/or B may indicate three situations: there is only A, there are both A and B, and there is only B. In addition, the character "/" in the present application generally indicates that the associated objects therebefore and thereafter have an "or" relationship.

In the embodiments of the present application, the same reference signs represent the same components, and for the sake of brevity, in different embodiments, detailed descriptions of the same components are omitted. It should be understood that the thickness, length, width and other dimensions of the various components in the embodiments of the present application shown in the drawings, as well as the overall thickness, length, width and other dimensions of the integrated device, are for illustrative purposes only, and should not constitute any limitation to the present application.

The term "multiple/a plurality of" appearing in the present application refers to more than two (including two).

In the present application, the battery cell may include lithium ion secondary battery, lithium ion primary battery, lithium sulfur battery, sodium lithium ion battery, sodium ion battery or magnesium ion battery etc., which is not limited in the embodiments of the present application. The battery cell may be in a shape of cylinder, flat body, cuboid or in other shape, which is not limited in the embodiments of the present application. Battery cells are generally divided into three types according to packaging methods: cylindrical battery cells, square battery cells and pouch battery cells, which are also not limited in the embodiments of the present application.

The battery mentioned in embodiments of the present application refers to a single physical module that includes one or more battery cells to provide higher voltage and capacity. For example, the battery mentioned in the present application may include a battery module or a battery pack, and the like. The battery generally includes a box body for packaging one or more battery cells or multiple battery modules. The box body may prevent a liquid or other foreign object from affecting the charging or discharging of the battery cells.

The battery cell includes a housing, at least one electrode assembly and an electrolytic solution, wherein the housing is used to accommodate the at least one electrode assembly and the electrolytic solution. The electrode assembly is composed of a positive electrode plate, a negative electrode plate and a separator. The battery cell works mainly by moving metal ions between the positive electrode plate and negative electrode plate. The positive electrode plate includes a positive current collector and a positive electrode active material layer. The positive electrode active material layer is coated on the surface of the positive current collector, and the part of the positive current collector not coated with the positive electrode active material layer is used as the positive electrode tab, so that the input or output of the electrical energy of the positive electrode plate is achieved by the positive electrode tab. Taking a lithium-ion battery as an example, the material of the positive current collector may be aluminum, and the positive electrode active material may be lithium cobaltate, lithium iron phosphate, ternary lithium, or lithium manganate, etc. The negative electrode plate includes a negative current collector and a negative electrode active material layer. The negative electrode active material layer is coated on the surface of the negative current collector, and the part of the negative current collector not coated with the negative electrode active material layer is used as the negative electrode tab, so that the input or output of the electrical energy of the negative electrode plate is achieved by the negative electrode tab. The material of the negative current collector may be copper, and the negative electrode active material may be carbon or silicon, etc. In order to ensure that a large current passes without fusing, the number of positive electrode tabs is multiple and the positive electrode tabs are stacked together, and the number of negative electrode tabs is multiple and the negative electrode tabs are stacked together.

The material of the separator may be PP (polypropylene) or PE (polyethylene), etc. In addition, the electrode assembly may be in a winding structure or may be in a laminated/stacked structure, which is not limited in the embodiments of the present application.

Batteries, which have outstanding advantages such as high energy density, low environmental pollution, high power density, long service life, wide adaptation range, and small self-discharge coefficient, are important part of the development of new energy today. The battery cell of a battery is obtained by assembling a positive electrode plate, a negative electrode plate and a separator into an electrode assembly (bare cell) by means of winding or lamination, then placing it into a casing, covering the casing with an end cover, and finally injecting an electrolytic solution. However, with the continuous development of battery technology, higher requirements have been put forward for the safety performance of batteries.

For ordinary battery cells, when the battery cells of the battery are short-circuited or overcharged, the internal gas pressure inside the battery cell may suddenly rise easily due to the internal thermal runaway, thus resulting in potential safety hazards such as battery fire and explosion. Therefore, a mounting hole is usually provided on the casing, and an explosion-proof valve is installed at the mounting hole, so that the internal gas pressure of the battery cell can break through the explosion-proof valve during the thermal runaway of the battery cell, to release the gas pressure inside the battery cell and reduce the risk of occurrence of fire and explosion of the battery cell.

The inventors found that during the use of the battery cell, the explosion-proof valve will be affected by the external use environment to be worn or damaged, resulting in poor use stability and short service life of the explosion-proof valve. The above problems lead to the phenomenon that explosion-proof valve is often opened in advance, causing low use safety of the battery cells.

In order to improve the use stability of the explosion-proof valve of the battery cell, in the prior art, a protective patch is usually provided at an outer side, where the explosion-proof valve is provided, of the casing of the battery cell, to better protect the explosion-proof valve. However, in the battery cell of this structure, since the protective patch protrudes from the outer side of the casing, on the one hand, there is a risk that the protective patch is worn or damaged by other components during use, resulting in that the protective patch cannot provide good protection for the explosion-proof valve, and that the service life of the battery cell is short, which is not conducive to improving the service life and use safety of the battery cell; and on the other hand, the protective patch may increase the volume of the battery cell, which is not conducive to saving the space occupied by battery cell.

Based on the considerations above, in order to solve the problems of relatively short service life and poor use safety of the battery cell, the inventors designed a battery cell after in-depth researches, where the battery cell includes a housing, a pressure relief mechanism and a protective member. The housing is provided with a stepped hole communicating with the inside of the housing, and the stepped hole includes a first hole section and a second hole section provided in a first direction, and the first hole section is located at one side of the second hole section away from the inside of the housing. The pressure relief mechanism and the protective member are provided in the second hole section and the first hole section respectively, and the protective member covers at least part of the pressure relief mechanism.

In the battery cell in this structure, the housing is provided with a stepped hole for installing the pressure relief mechanism and the protective member, and the protective member and the pressure relief mechanism are provided respectively in the first hole section and the second hole section of the stepped hole which are provided in the first direction, and the first hole section is located at one side of the second hole section away from the inside of the housing, so that the protective member can cover at least part of the pressure relief mechanism to protect the pressure relief mechanism. The battery cell of this structure can reduce the phenomenon that the protective member protrudes from the outer surface of the housing, which, on the one hand, can better protect the protective member to reduce the risk of occurrence of wear or damage of the protective member during use, facilitating the protective member protecting the pressure relief mechanism, further effectively prolonging the service life of the battery cell, and effectively improving the use stability and use safety of the battery cell, and on the other hand, can reduce the phenomenon that the protective member increases the volume of the battery cell, facilitating saving the space occupied by battery cell.

The battery cell disclosed in the embodiments of the present application may be used in, but not limited to, electrical apparatus such as vehicles, ships or aircrafts. The power source system of the electrical apparatus may be composed using the battery cell and battery disclosed in the present application, which is conductive to improving the service life and use safety of the battery cell.

Embodiments of the present application provide an electrical apparatus using the battery as a power source. The electrical apparatus may be, but not limited to, a mobile phone, a tablet, a notebook computer, an electric toy, an electric tool, a battery car, an electric vehicle, a ship, a spacecraft, and the like. Among them, the electric toy may include fixed or mobile electric toy, for example, game console, electric car toy, electric ship toy and electric airplane toy, etc., and the spacecraft may include airplane, rocket, space shuttle, spaceship, etc.

In the following embodiments, for convenience of description, description is made by taking, as an example, an electrical apparatus according to an embodiment of the present application being a vehicle 1000.

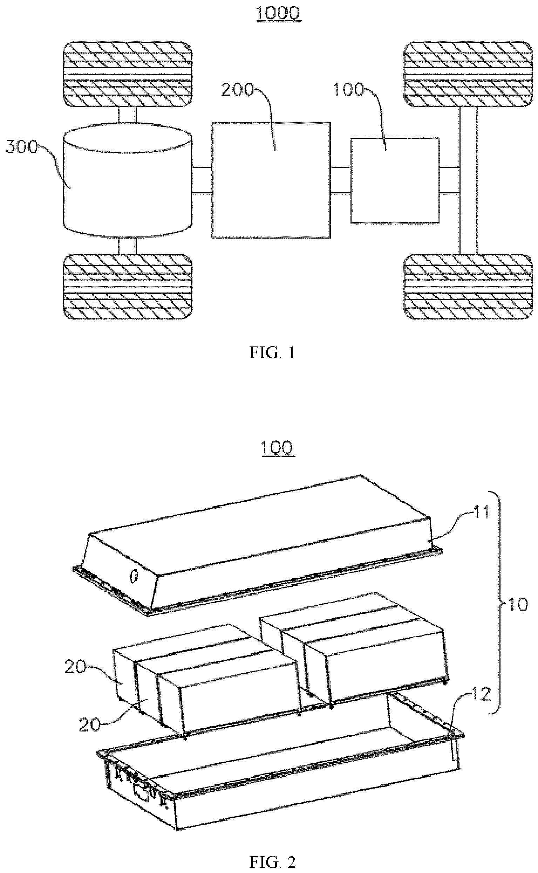

Referring to FIG. 1, FIG. 1 is a schematic structural view of a vehicle 1000 provided in some embodiments of the present application. The vehicle 1000 may be a fuel vehicle, a gas vehicle or a new energy vehicle, and the new energy vehicle may be a pure electric vehicle, a hybrid power vehicle or an extended-range vehicle, etc. A battery 100 is provided inside the vehicle 1000, and the battery 100 may be provided at the bottom, head or tail of the vehicle 1000. The battery 100 may be used for supplying power to the vehicle 1000. For example, the battery 100 may be used as an operating power source of the vehicle 1000. The vehicle 1000 may further include a controller 200 and a motor 300, the controller 200 being used to control the battery 100 to supply power to the motor 300, for example, for working power requirements during starting, navigating and running of the vehicle 1000.

In some embodiments of the present application, the battery 100 can not only be used as an operating power source for the vehicle 1000, but also be used as a driving power source for the vehicle 1000 to replace or partially replace fuel oil or natural gas to provide driving power for the vehicle 1000.

Referring to FIG. 2, FIG. 2 is a structural exploded view of a battery 100 provided in some embodiments of the present application. The battery 100 include a box body 10 and battery cells 20, and the battery cells 20 are used to be accommodated in the box body 10. In the above, the box body 10 is used for providing an assembly space for the battery cells 20, and the box body 10 may be in various structures. In some embodiments, the box body 10 may include a first box body 11 and a second box body 12, the first box body 11 and the second box body 12 cover each other, and the first box body 11 and the second box body 12 together define an assembly space for accommodating the battery cell 20. The second box body 12 may be in a hollow structure with one end open, and the first box body 11 may be in a plate-shaped structure. The first box body 11 covers the open side of the second box body 12, so that the first box body 11 and the second box body 11 together define the assembly space; and the first box body 11 and the second box body 12 may also be both in a hollow structure with one side open, and the open side of the first box body 11 covers the open side of the second box body 12. Of course, the box body 10 formed by the first box body 11 and the second box body 12 may be in various shapes, such as a cylinder, a cuboid and so on.

In the battery 100, there may be multiple battery cells 20, the multiple battery cells 20 may be in serial, parallel or hybrid connection with each other. The hybrid connection means that the multiple battery cells 20 are connected with each other both in series and in parallel. The multiple battery cells 20 may be in serial, parallel or hybrid connection with each other directly, and then the whole composed of the multiple battery cells 20 is accommodated in the box body 10. Certainly, the battery 100 may be formed in the way that the multiple battery cells 20 are first in serial or in parallel or in hybrid connection with each other to form battery modules, and then the multiple battery modules are in serial or in parallel or in hybrid connection with each other to form a whole, and accommodated in the box body 10. The battery 100 may also include other structures, for example, the battery 100 may further include a bus component for realizing the electrical connection between the multiple battery cells 20.

In the above, each battery cell 20 may be a secondary battery or a primary battery. It may also be a lithium-sulfur battery, a sodium-ion battery or a magnesium-ion battery, but is not limited thereto. The battery cell 20 may be in a shape of cylinder, flat body, cuboid or in other shape, etc. Exemplarily, in FIG. 2, the battery cell 20 is in a cuboid structure.

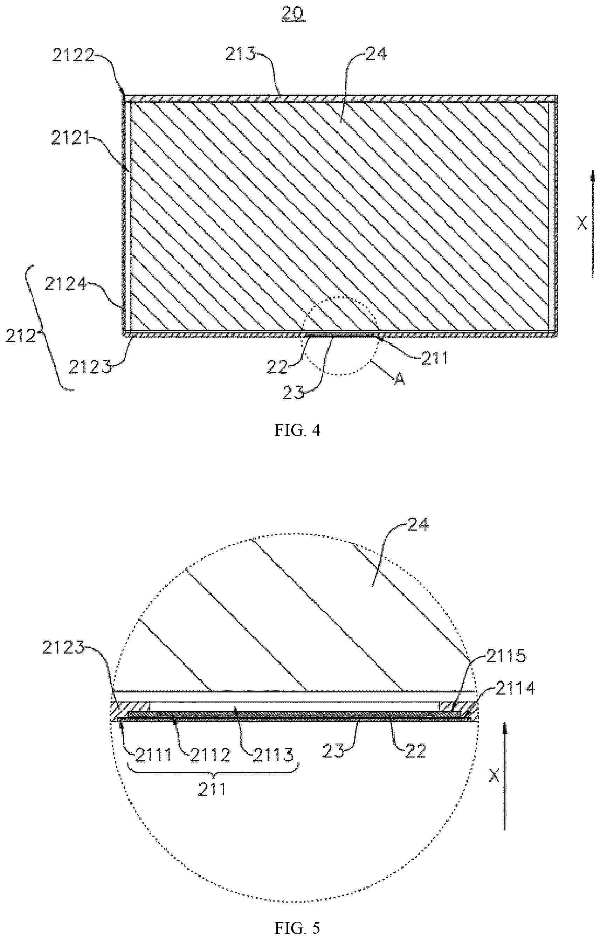

According to some embodiments of the present application, referring to FIG.3, FIG. 4 and FIG. 5, FIG. 3 is a structural exploded view of a battery cell 20 provided in some embodiments of the present application; FIG. 4 is a sectional view of a battery cell 20 provided in some embodiments of the present application; and FIG. 5 is a local enlarged view of Part A of the battery cell 20 shown in FIG. 4. The present application provides a battery cell 20, where the battery cell 20 includes a housing 21, a pressure relief mechanism 22, and a protective member 23. The housing 21 is provided with a stepped hole 211 communicating with the inside of the housing 21, and the stepped hole 211 includes a first hole section 2111 and a second hole section 2112 provided in a first direction X, and the first hole section 2111 is located at one side of the second hole section 2112 away from the housing. The pressure relief mechanism 22 and the protective member 23 are provided in the second hole section 2112 and the first hole section 2111 respectively, and the protective member 23 covers at least part of the pressure relief mechanism 22.

The battery cell 20 further includes an electrode assembly 24, and the housing 21 is used to accommodate the electrode assembly 24 thereinside. Optionally, the housing 21 may also be used to accommodate an electrolyte, such as an electrolytic solution. The housing 21 may be in various structural forms. The material of the housing 21 may also be various, such as copper, iron, aluminum, steel, aluminum alloy, etc.

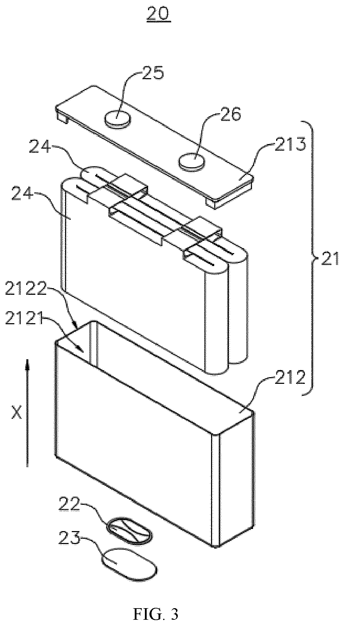

In FIG. 3, the housing 21 includes a casing 212 and an end cover 213. An accommodation space 2121 for accommodating the electrode assembly 24 is formed inside the casing 212, and an opening 2122 is formed at one end of the casing 212. The opening 2122 communicates with the accommodation space 2121, i.e., the casing 212 is in a hollow structure with one end open, and the end cover 213 covers the opening 2122 of the casing 212 to form sealed connection, to form a sealed space used for accommodating the electrode assembly 24 and the electrolytic solution.

When assembling the battery cell 20, the electrode assembly 24 may be placed inside the casing 212 first, electrolyte is filled into the casing 212, and then the end cover 213 covers the opening 2122 of the casing 212 to form sealed connection, to form a sealed space used for accommodating the electrode assembly 24 and the electrolyte. Exemplarily, the end cover 213 is welded to the casing 212.

The casing 212 may be in various shapes, such as a cylinder, a cuboid and so on. The shape of the casing 212 may be determined according to the specific shape of the electrode assembly 24. For example, if the electrode assembly 24 is in a cylindrical structure, a cylindrical structure may be selected; and if the electrode assembly 24 is in a cuboid structure, a cuboid structure may be selected. Exemplarily, in FIG. 3, the electrode assembly 24 is in a cuboid structure, and the casing 212 is in a cuboid structure. Of course, the end cover 213 may be in various shapes, for example, the end cover 213 is in a plate-shaped structure or a hollow structure with one end open, and so on. Exemplarily, in FIG. 3, the casing 212 is in a cuboid structure, the end cover 213 is in a plate-shaped structure, and the end cover 213 covers the opening 2122 of the casing 212.

In the above, the stepped hole 211 may be provided on the casing 212, or may be provided on the end cover 213. Exemplarily, in FIG. 3 and FIG. 4, the casing 212 has a bottom wall 2123 and a side wall 2124. The side wall 2124 is provided surrounding the peripheral wall of the bottom wall 2123, and one end of the peripheral wall is connected to the bottom wall 2123, and the other end thereof in the first direction X defines an opening 2122, and the stepped hole 211 is provided on the bottom wall 2123 of the casing 212, that is, the pressure relief mechanism 22 is installed on the bottom wall 2123 of the casing 212. Certainly, in some embodiments, the stepped hole 211 may also be provided on the side wall 2124 of the casing 212 or provided on the end cover 213.

The stepped hole 211 includes a first hole section 2111 and a second hole section 2112 provided in the first direction X, and the first hole section 2111 is located at one side of the second hole section 2112 away from the housing, that is, the stepped hole 211 includes at least two hole sections, the first hole section 2111 and the second hole section 2112 respectively, and the second hole section 2112 is closer to the inside of 212 than the first hole section 2111. It should be noted that the first direction X is a direction from the outer surface of the casing 212 to the inside of the casing 212 in the thickness direction of the casing 212. Exemplarily, in FIG. 3, since the stepped hole 211 is provided on the bottom wall 2123 of the casing 212, that is, the first direction X is a direction from the bottom wall 2123 of the casing 212 to the opening 2122 in the thickness direction of the bottom wall 2123.

Exemplarily, in FIG. 5, the stepped hole 211 has three hole sections. For the convenience of description, the three hole sections are the first hole section 2111, the second hole section 2112 and the third hole section 2113 which are arranged sequentially in the first direction X and whose hole diameters gradually decrease. The hole wall of the first hole section 2111 is connected to the outer surface of the casing 212. The pressure relief mechanism 22 is disposed in the second hole section 2112. The protective member 23 is disposed in the first hole section 2111, and the protective member 23 covers the second hole section 2111. Of course, in other embodiments, the stepped hole 211 may also have two, four, five or six hole sections, etc. Similarly, the first hole section 2111, the second hole section 2112 and the third hole section 2113 may also be provided discontinuously, that is, other hole section(s) may be provided between the first hole section 2111 and the second hole section 2112 or between the second hole section 2112 and the third hole section 2113. Of course, in some embodiments, the hole diameters of the first hole section 2111, the second hole section 2112, and the third hole section 2113 may also gradually increase in the first direction X.

It should be indicated that the pressure relief mechanism 22 is used for releasing the pressure inside the battery cell 20 when the internal pressure or temperature of the battery cell 20 reaches a predetermined value. Exemplarily, the pressure relief mechanism 22 may be a component such as an explosion-proof valve, a bursting disc, a gas valve, a pressure relief valve, or a safety valve, etc.

The pressure relief mechanism 22 may be in various shapes, such as elliptical shape, circular shape or rectangular shape. Exemplarily, in FIG. 3, the pressure relief mechanism 22 is in an elliptical structure. Correspondingly, the hole section of the stepped hole 211 is also in an elliptical structure. In the above, the long side of the pressure relief mechanism 22 in an elliptical structure extends in the width direction of the casing 212, that is, the length direction of the pressure relief mechanism 22 is the same as the width direction of the casing 212.

The protective member 23 covers the side of the pressure relief mechanism 22 away from the electrode assembly 24 to protect the pressure relief mechanism 22, so as to reduce the risk of occurrence of wear or damage of the pressure relief mechanism 22 during use, thereby improving the use stability of the pressure relief mechanism. 22 to reduce the phenomenon that (the valve of) the pressure relief mechanism 22 is opened in advance. In the above, the protective member 23 may be made of various materials, such as plastic, rubber or silicone, etc.

In some embodiments, the battery cell 20 may further include a positive electrode terminal 25 and a negative electrode terminal 26. The positive electrode terminal 25 and the negative electrode terminal 26 are both installed on the end cover 213. The positive electrode terminal 25 and the negative electrode terminal 26 are both used to be electrically connected with the electrode assembly 24, to serve as the positive output electrode and the negative output electrode of the battery cell 20.

It can be understood that the housing 21 is not only limited to the above structure. The housing 21 may also be in other structure. For example, the housing 21 includes a casing 212 and two end covers 213, where the housing 212 is in a hollow structure with two opposite ends open, and one end cover 213 covers one end of the casing 212 correspondingly and forms sealed connection to form a sealed space used for accommodating the electrode assembly 24 and the electrolyte. In this structure, the positive electrode terminal 25 and the negative electrode terminal 26 may be installed on the same end cover 213 or may be installed on different end covers 213.

The electrode assembly 24 is a component, in the battery cell 20, where electrochemical reactions occur. The electrode assembly 24 may include a positive electrode plate, a negative electrode plate and a separator. The electrode assembly 24 may be in a winding structure formed by winding the positive electrode plate, the separator and the negative electrode plate, or may be in a stacked structure formed by stacking and arranging the positive electrode plate, the separator and the negative electrode plate.

It should be noted that in the embodiments of the present application, there may be one or more electrode assemblies 24 accommodated in the housing 21. Exemplarily, in FIG. 3, there are two electrode assemblies, and the two electrode assemblies are arranged in a stacked manner.

The housing 21 is provided with a stepped hole 211 used for allowing installing the pressure relief mechanism 22 and the protective member 23, and the protective member 23 and the pressure relief mechanism 22 are provided respectively in the first hole section 2111 and the second hole section 2112 of the stepped hole 211 which are provided in the first direction X, and the first hole section 2111 is located at one side of the second hole section 2112 away from the inside of the housing 21, so that the protective member 23 can cover at least part of the pressure relief mechanism 22 to protect the pressure relief mechanism 22. The battery cell 20 of this structure can reduce the phenomenon that the protective member 23 protrudes from the outer surface of the housing 21, which, on the one hand, can better protect the protective member 23 to reduce the risk of wear or damage of the protective member 23 during use, facilitating the protective member 23 protecting the pressure relief mechanism 22, further effectively prolonging the service life of the battery cell 20, and effectively improving the use stability and use safety of the battery cell 20, and on the other hand, can reduce the phenomenon that the protective member 23 increases the volume of the battery cell 20, facilitating saving the space occupied by battery cell 20.

In some embodiments of the present application, referring to FIG. 4 and FIG. 5, the hole diameter of the first hole section 2111 is larger than hole diameter of the second hole section 2112.

In the above, the hole diameter of the first hole section 2111 is larger than the hole diameter of the second hole section 2112, that is, the stepped hole 211 is in a structure in which the hole diameter gradually decreases in the first direction X. That is, in the first direction X, the hole diameter of the hole section of the stepped hole 211 closest to the accommodation space 2121 of the casing 212 is the smallest. Exemplarily, in FIG. 5, in the first direction X, the hole diameters of the first hole section 2111, the second hole section 2112, and the third hole section 2113 gradually decrease.

By setting the hole diameter of the first hole section 2111 to be larger than the hole diameter of the second hole section 2112, the stepped hole 211 is in a structure in which the hole diameter gradually decreases in the first direction X. For the battery cell 20 using this structure, it is convenient to install the pressure relief mechanism 22 in the second hole section 2112 from the outside of the housing 21 during assembly process, and to install the protective member 23 in the first hole section 2111, facilitating reducing the assembly difficulty of the pressure relief mechanism 22 and the protective member 23.

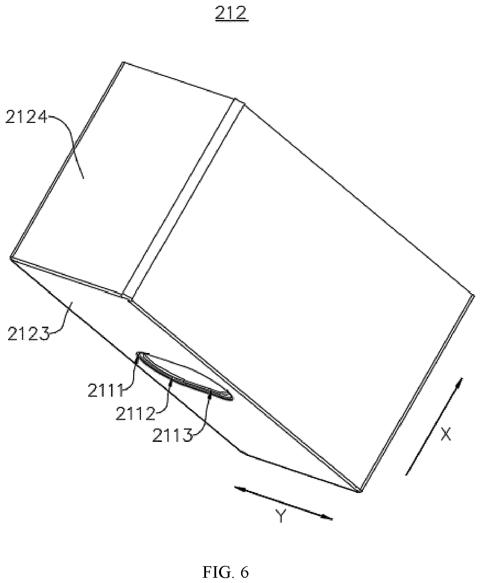

According to some embodiments of the present application, referring to FIG. 5, and further referring to FIG. 6, FIG. 6 is a schematic structural view of a casing 212 of a battery cell 20 provided in some embodiments of the present application. The stepped hole 211 further includes a third hole section 2113. The first hole section 2111, the second hole section 2112 and the third hole section 2113 are arranged in the first direction X, and the hole diameter of the third hole section 2113 is smaller than the hole diameter of the second hole section 2112. The pressure relief mechanism 22 is provided in the second hole section 2112 and covers the third hole section 2113. The protective member 23 is provided in the first hole section 2111, and covers the second hole section 2112.

In the above, the first hole section 2111, the second hole section 2112 and the third hole section 2113 are arranged in the first direction X, and the hole diameter of the third hole section 2113 is smaller than the hole diameter of the second hole section 2112. That is, the stepped hole 211 is provided with at least three hole sections, respectively the first hole section 2111, the second hole section 2112 and the third hole section 2113 which are arranged in the first direction X and whose hole diameters gradually decrease. Exemplarily, in FIG. 5 and FIG. 6, the stepped hole 211 is provided with three hole sections. Of course, in other embodiments, the stepped hole 211 may also have four, five or six hole sections, etc. Of course, when the stepped hole 211 has four or more hole sections, the first hole section 2111 may be the hole section farthest from the accommodation space 2121 of the casing 212 among the plurality of hole sections, or may be the hole section located in the middle region among the plurality of hole sections. Similarly, the first hole section 2111, the second hole section 2112, and the third hole section 2113 may also be provided continuously or discontinuously, in the first direction X.

Exemplarily, the first hole section 2111, the second hole section 2112, and the third hole section 2113 are continuously provided in the first direction X.

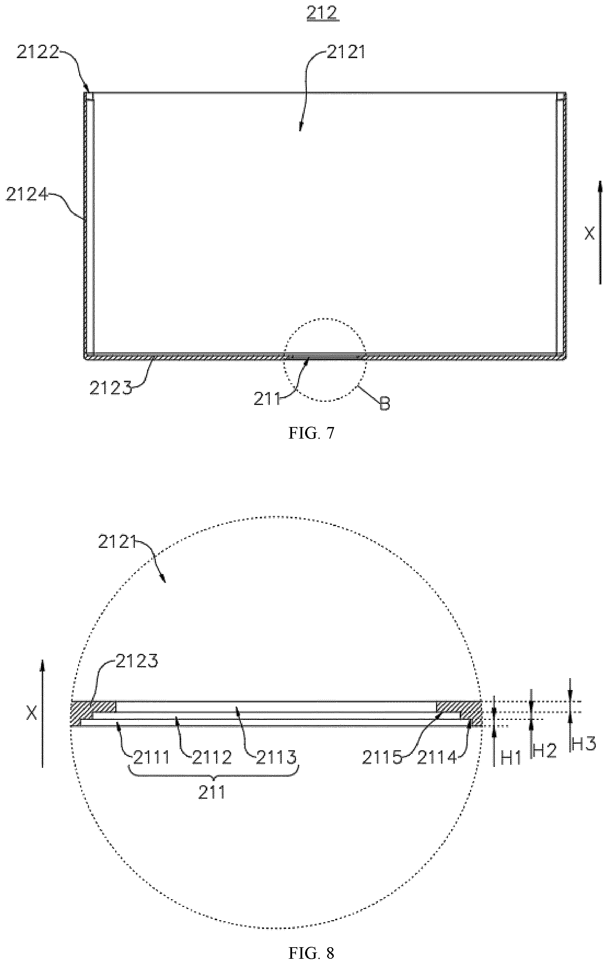

In some embodiments, referring to FIG. 5 and FIG. 6, and further referring to FIG. 7 and FIG. 8, FIG. 7 is a sectional view of a casing 212 of a battery cell 20 provided in some embodiments of the present application; and FIG. 8 is a local enlarged view of Part B of the casing 212 shown in FIG. 7. The housing 21 has a first connection surface 2114. The hole wall of the first hole section 2111 and the hole wall of the second hole section 2112 are connected through the first connection surface 2114. The protective member 23 abuts against the first connection surface 2114.

In the above, the hole wall of the first hole section 2111 and the hole wall of the second hole section 2112 are connected through the first connection surface 2114. That is, the first connection surface 2114 is connected between the hole wall of the first hole section 2111 and the hole wall of the second hole section 2112, to form the shape of the step structure. Exemplarily, in FIG. 8, the hole wall of the first hole section 2111 and the hole wall of the second hole section 2112 are both perpendicular to the first connection surface 2114, so that when the protective member 23 abuts against the first connection surface 2114, the contact area between the protection member 23 and the first connection surface 2114 can be effectively increased, to improve structural stability. Of course, in other embodiments, the hole wall of the first hole section 2111 and the hole wall of the second hole section 2112 may also each be arranged at an obtuse angle or an acute angle with the first connection surface 2114.

The housing 21 has a first connection surface 2114 used for connecting the hole wall of the first hole section 2111 and the hole wall of the second hole section 2112, so that the protective member 23 can abut against the first connection surface 2114 after being assembled into the first hole section 2111 of the stepped hole 211. For the housing 21 of this structure, it is convenient to install the protective member 23, and can effectively improve the assembly stability and reliability of providing the protective member 23 in the first hole section 2111.

Optionally, the housing 21 further has a second connection surface 2115. The hole wall of the second hole section 2112 and the hole wall of the third hole section 2113 are connected through the second connection surface 2115. The pressure relief mechanism 22 abuts against the second connection surface 2115.

In the above, the hole wall of the second hole section 2112 and the hole wall of the third hole section 2113 are connected through the second connection surface 2115. That is, the second connection surface 2115 is connected between the hole wall of the second hole section 2112 and the hole wall of the third hole section 2113, to form the shape of the step structure. Exemplarily, in FIG. 8, the hole wall of the second hole section 2112 and the hole wall of the third hole section 2113 are both perpendicular to the second connection surface 2115, so that when the pressure relief mechanism 22 abuts against the second connection surface 2115, the contact area between the pressure relief mechanism 22 and the second connection surface 2115 can be effectively increased, to improve structural stability. Of course, in other embodiments, the hole wall of the second hole section 2112 and the hole wall of the third hole section 2113 may also each be arranged at an obtuse angle or an acute angle with the second connection surface 2115.

The housing 21 has a second connection surface 2115 used for connecting the hole wall of the second hole section 2112 and the hole wall of the third hole section 2113, so that the pressure relief mechanism 22 may abut against the second connection surface 2115 after being assembled into the second hole section 2112 of the stepped hole 211. For the housing 21 of this structure, it is convenient to install the pressure relief mechanism 22, and can improve the assembly stability and reliability of providing the pressure relief mechanism 22 in the second hole section 2112.

The stepped hole 211 is provided with at least three hole sections, namely the first hole section 2111, the second hole section 2112 and the third hole section 2113 arranged in the first direction X. The pressure relief mechanism 22 is provided in the second hole section 2112 and covers the third hole section 2113, facilitating the pressure relief mechanism 22 releasing the internal pressure of the battery cell 20, and improving the assembly stability and reliability of assembling the pressure relief mechanism 22 into the stepped hole 211. In addition, by arranging the protective member 23 in the first hole section 2111 to cover the second hole section 2112, the protective member 23 can cover the pressure relief mechanism 22 as a whole, thereby better protecting the pressure relief mechanism 22.

According to some embodiments, referring to what is shown in FIG. 8, in the first direction X, the depth of the first hole section 2111 is H₁, satisfying: 0.2mm≤H₁≤0.6mm.

In the above, the depth of the first hole section 2111 in the first direction X is the extension length of the first hole section 2111 in the first direction X, that is, the extension length of the first hole section 2111 in the first direction X is 0.2mm to 0.6mm.

Exemplarily, the stepped hole 211 is provided on the bottom wall 2123 of the casing 212, and the thickness of the bottom wall 2123 in the first direction X is 1 mm to 3 mm.

By setting the depth of the first hole section 2111 between 0.2mm and 0.6mm, on the one hand, it can alleviate the phenomenon of great difficulty in assembling the protective member 23 due to the too small depth of the first hole section 2111, and on the other hand, can alleviate the phenomenon of great difficulty in processing the first hole section 2111 due to the too large depth of the first hole section 2111, and can alleviate the phenomenon that more material needs to be squeezed and removed during the processing of the first hole section 2111 due to too large depth of the first hole section 2111, which results in that the outer surface of the housing 21 is partially bulged or partially squeezed to be extra wide during the processing of the first hole section 2111.

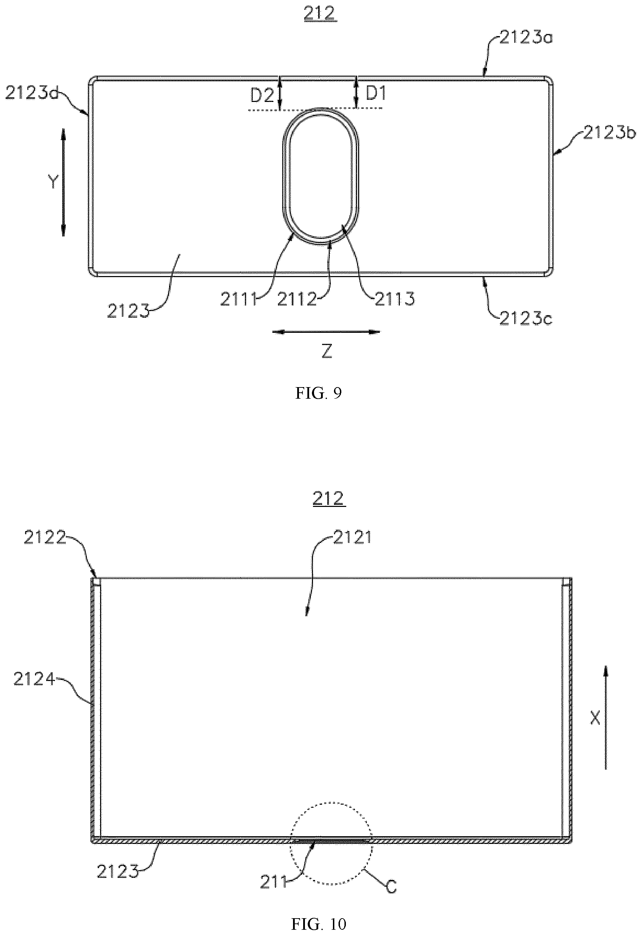

According to some embodiments of the present application, referring to FIG. 8, and further referring to FIG. 9, FIG. 9 is a bottom view of a casing 212 provided in some embodiments of the present application. The cross-sectional area of the first hole section 2111 is S, where when 50mm²≤S≤700mm², 0.2mm≤H₁≤0.6mm; and when 700mm²≤S≤1500mm², 0.2mm≤H₁≤0.4mm.

In the above, the cross-sectional area of the first hole section 2111 is S, that is, the area of the cross section of the first hole section 2111 perpendicular to the first direction X is S. That is, the area of a region formed by the projection of the first hole section 2111 on the outer surface of the casing 212 in the first direction X is S.

When the cross-sectional area of the first hole section 2111 is between 50mm² and 700mm², the depth of the first hole section 2111 is set between 0.2mm and 0.6mm, and when the cross-sectional area of the first hole section 2111 is between 700mm² and 1500mm², the depth of the first hole section 2111 is set between 0.2mm and 0.4mm. That is, when the cross-sectional area of the first hole section 2111 is different, the depth of the first hole section 2111 needs to be set cooperatively in a different range to alleviate that more material needs to be squeezed and removed during the processing of the first hole section 2111 due to too large cross-sectional area of the first hole section 2111 and too large depth of the first hole section 2111, facilitating reducing the phenomenon that the outer surface of the housing 21 is partially bulged or partially squeezed to be extra wide during the processing of the first hole section 2111.

According to some embodiments, referring to what is shown in FIG. 8, in the first direction X, the depth of the second hole section 2112 is H₂, satisfying: 0.4mm≤ H₂≤0.8mm.

In the above, the depth of the second hole section 2112 in the first direction X is the extension length of the second hole section 2112 in the first direction X, that is, the extension length of the second hole section 2112 in the first direction X is 0.4mm to 0.8mm.

By setting the depth of the second hole section 2112 between 0.4mm and 0.8mm, on the one hand, it can alleviate the problems of great assembly difficulty of the pressure relief mechanism 22 and poor connection reliability of the pressure relief mechanism 22 due to the too small depth of the second hole section 2112, and on the other hand, can alleviate the phenomenon of increased processing difficulty of the second hole section 2112 due to the too large depth of the second hole section 2112.

According to some embodiments, continuing to refer to what is shown in FIG. 8, in the first direction X, the depth of the third hole section 2113 is H₃, satisfying: 0.3mm≤ H₃≤2mm.

In the above, the depth of the third hole section 2113 in the first direction X is the extension length of the third hole section 2113 in the first direction X, that is, the extension length of the third hole section 2113 in the first direction X is 0.3mm to 2mm.

By setting the depth of the third hole section 2113 between 0.3mm and 2mm, on the one hand, it can alleviate the phenomenon that due to the too small depth of the third hole section 2113, the structural strength of the region used for supporting and assembling the pressure relief mechanism 22 when the pressure relief mechanism 22 covers the third hole section 2113 is relatively weak, and on the other hand, can alleviate the phenomenon of increased processing difficulty of the third hole section 2113 due to the too large depth of the third hole section 2113. In addition, if the depth of the third hole section 2113 is too small, the electrode assembly and other components arranged inside the housing may be caused to squeeze/press the pressure relief mechanism 22, thereby causing damage to the pressure relief mechanism 22 and affecting its normal use. Therefore, the setting the depth of the third hole section 2113 between 0.3 mm and 2 mm can protect the pressure relief mechanism 22 and reduce the risk that the pressure relief mechanism 22 is damaged.

According to some embodiments of the present application, referring to FIG. 7 and FIG. 8, the first hole section 2111, the second hole section 2112, and the third hole section 2113 are continuously provided in the first direction X.

In the above, the first hole section 2111, the second hole section 2112 and the third hole section 2113 are continuously provided, that is, the first hole section 2111, the second hole section 2112 and the third hole section 2113 are arranged sequentially and continuously in the first direction X. Exemplarily, in FIG. 8, the stepped hole 211 is provided with only the first hole section 2111, the second hole section 2112 and the third hole section 2113, that is, the stepped hole 211 includes three hole sections. Certainly, in some embodiments, the stepped hole 211 may include four, five, or six hole sections. When the stepped hole 211 has four or more hole sections, the other hole sections are located at one side of the third hole section 2113 away from the second hole section 2112 in the first direction X.

By arranging the first hole section 2111, the second hole section 2112 and the third hole section 2113 continuously, it is conductive to further improving the manufacturability of the stepped hole 211, to reduce the processing difficulty of the stepped hole 211. In addition, the stepped hole 211 using this structure may also be provided with more hole sections on one side of the third hole section 2113 in the first direction X, which is conducive to further increasing the distance between the pressure relief mechanism 22 and the inner surface wall of the housing 21, to reduce the risk that the vibration conditions or expansion of the electrode assembly 24 of the battery cell 20 causes impact or pressing to the pressure relief mechanism 22.

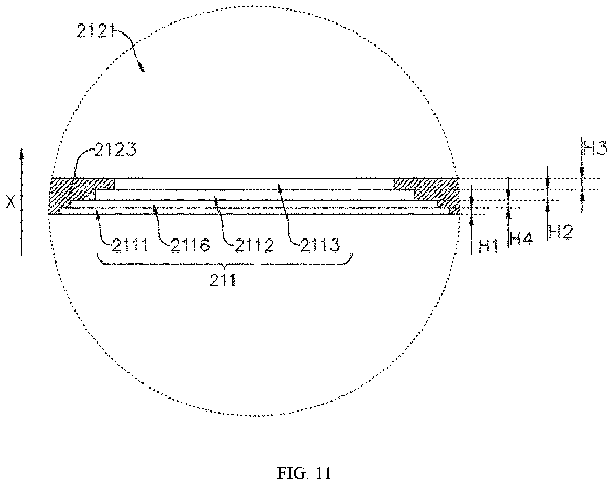

According to some embodiments of the present application, referring to FIG.10 and FIG. 11, FIG. 10 is a sectional view of a casing 212 of a battery cell 20 provided in yet some embodiments of the present application; and FIG. 11 is a local enlarged view of Part C of the casing 212 shown in FIG. 10. The stepped hole 211 further includes a fourth hole section 2116. In the first direction X, the fourth hole section 2116 is located between the first hole section 2111 and the second hole section 2112, and the hole diameter of the fourth hole section 2116 is smaller than the hole diameter of the first hole section 2111 and larger than the hole diameter of the second hole section 2112.

In the above, in the first direction X, the fourth hole section 2116 is located between the first hole section 2111 and the second hole section 2112. The hole diameter of the fourth hole section 2116 is smaller than the hole diameter of the first hole section 2111 and larger than the hole diameter of the second hole section 2112. That is, the stepped hole 211 includes at least four hole sections, and the four hole sections are the first hole section 2111, the fourth hole section 2116, the second hole section 2112 and the third hole section 2113, which are arranged in sequence in the first direction X and whose hole diameters gradually decrease. That is, the protective member 23 provided in the first hole section 2111 and the pressure relief mechanism 22 provided in the second hole section 2112 are separated by the fourth hole section 2116.

By further providing a fourth hole section 2116 between the first hole section 2111 and the second hole section 2112 in the first direction X, the first hole section 2111 and the second hole section 2112 are separated by the fourth hole section 2116, so as to increase the distance between the pressure relief mechanism 22 and the protective member 23, which further facilitates the pressure relief mechanism 22 releasing the pressure inside the battery cell 20 to ensure normal use of the pressure relief mechanism 22.

In some embodiments, referring to what is shown in FIG. 11, in the first direction X, the depth of the fourth hole section 2116 is H₄, satisfying: 0.2mm< H₄≤0.4mm.

In the above, the depth of the fourth hole section 2116 in the first direction X is the extension length of the fourth hole section 2116 in the first direction X, that is, the extension length of the fourth hole section 2116 in the first direction X is 0.2mm to 0.4mm.

By setting the depth of the fourth hole section 2116 between 0.2mm and 0.4mm, on the one hand, it can alleviate the phenomenon that the distance between the pressure relief mechanism 22 and the protective member 23 is insufficient due to the too small depth of the fourth hole section 2116, to ensure the normal use of the pressure relief mechanism 22, and on the other hand, can alleviate the phenomenon that the space occupied by the fourth hole section 2116 is too large due to the too large depth of the fourth hole section 2116.

According to some embodiments of the present application, referring to what is shown in FIG. 6, FIG. 7 and FIG. 8, the housing 21 has a wall portion, the stepped hole 211 is disposed on the wall portion, and first hole section 2111 penetrates through an outer surface of the wall portion.

In the above, the housing 21 has a wall portion, that is, the wall portion is a wall of the housing 21. The wall portion may be the end cover 213 of the housing 21, or may be the bottom wall 2123 or the side wall 2124 of the casing 212. Exemplarily, in FIG. 6 and FIG. 9, the wall portion is the bottom wall 2123 of the casing 212. That is, the stepped hole 211 is provided on the bottom wall 2123 of the casing 212.

The first hole section 2111 penetrates through the outer surface of the wall portion, i.e., the hole wall of the first hole section 2111 is connected to the outer surface of the bottom wall 2123.That is, the first hole section 2111 is the hole section, among the multiple hole sections of the stepped hole 211, farthest from the accommodation space 2121 of the casing 212 in the first direction X.

The housing 21 has a wall portion for being provided with the stepped hole 211, and the first hole section 2111 of the stepped hole 211 penetrates through the outer surface of the wall portion. That is, the first hole section 2111 is the hole section, among the multiple hole sections of the stepped hole 211, farthest from the inside of the housing 21, i.e., the hole wall of the first hole section 2111 is connected to the outer surface of the wall portion. Such structure facilitates assembling the protective member 23, which is conductive to reducing the assembly difficulty of assembling the protective member 23 into the first hole section 2111.

According to some embodiments of the present application, referring to FIG. 6 and FIG. 9, the minimum distance from the hole wall of the first hole section 2111 to the edge of the wall portion is D₁, which satisfies D₁≥3mm.

In the above, the minimum distance from the hole wall of the first hole section 2111 to the edge of the wall portion is the minimum distance between the hole wall of the first hole section 2111 and the edge of the bottom wall 2123.

Exemplarily, the battery cell 20 is in a cuboid structure, i.e., the casing 212 is in a cuboid structure, so that the bottom wall 2123 is in a rectangular structure. The minimum distance from the hole wall of the first hole section 2111 to the edge of the bottom wall 2123 is the distance between the hole wall of the first hole section 2111 and the closest side among the four sides of the bottom wall 2123 (closest side meaning that the distance between the side and the hole wall of the first hole section is smallest). Certainly, in other embodiments, the battery cell 20 may also be in a cylindrical structure, that is, the bottom wall 2123 is in a circular structure, and the minimum distance from the hole wall of the first hole section 2111 to the edge of the bottom wall 2123 is the minimum size from the hole wall of the first hole section 2111 to the outer edge of the bottom wall 2123 in the radial direction of the bottom wall 2123.

By setting the minimum distance between the hole wall of the first hole section 2111 and the edge of the wall portion to be greater than or equal to 3 mm, it can alleviate the phenomenon of great processing difficulty of the first hole section 2111 due to the too small distance between the hole wall of the first hole section 2111 and the edge of the wall portion, facilitating processing of the first hole section 2111 of the stepped hole 211.

According to some embodiments of the present application, referring to FIG. 9, the minimum distance from the hole wall of the hole section adjacent to the first hole section 2111 to the edge of the wall portion is D₂, which satisfies 0.5mm≤D₂-D₁≤3mm.

In the above, the minimum distance from the hole wall of the hole section adjacent to the first hole section 2111 to the edge of the wall portion is the minimum distance between the hole wall of the hole section adjacent to the first hole section 2111 and the edge of the bottom wall 2123. It should be noted that in an embodiment where the first hole section 2111, the second hole section 2112 and the third hole section 2113 are continuously arranged in the first direction X, D₂ is the minimum distance from the hole wall of the second hole section 2112 to the edge of the bottom wall 2123 of the casing 212; and in the embodiment where the fourth hole section 2116 is provided between the first hole section 2111 and the second hole section 2112, D₂ is the minimum distance between the hole wall of the fourth hole section 2116 to the edge of the bottom wall 2123 of the casing 212.

Exemplarily, in FIG. 9, taking, as an example, the embodiment where the stepped hole 211 includes a first hole section 2111, a second hole section 2112 and a third hole section 2113 continuously provided in the first direction X, the bottom wall 2123 of the casing 212 is in a rectangular structure and the stepped hole 211 is in an elliptical shape, and the direction of the long side of the elliptical shape is consistent with the width direction Y of the bottom wall, and the width direction Y of the bottom wall and the first direction X are perpendicular to each other, so that the minimum distance D₁ from the hole wall of the first hole section 2111 to the edge of the wall portion is the minimum distance from the hole wall of the first hole section 2111 to the edge of the bottom wall 2123 in the width direction Y of the bottom wall, and that the minimum distance D₂ from the hole wall of the second hole section 2112 to the edge of the wall portion is the minimum distance from the hole wall of the second hole section 2112 to the edge of the bottom wall 2123 in the width direction Y of the bottom wall.

By setting the difference between the minimum distance from the hole wall of the hole section adjacent to the first hole section 2111 to the edge of the wall portion and the minimum distance from the hole wall of the first hole section 2111 to the edge of the wall portion between 0.5mm and 3mm, on the one hand, it can alleviate the phenomenon that due to the too small difference, the processing difficulty of the first hole section 2111 is great and it is not convenient to assemble the protective member 23, and on the other hand, can alleviate that more material needs to be squeezed and removed during the processing of the first hole section 2111 due to too large difference, facilitating alleviating the phenomenon that the outer surface of the wall portion is partially bulged or partially squeezed to be extra wide during the processing of the first hole section 2111.

According to some embodiments of the present application, the cross-sectional area of the first hole section 2111 is S, where when 50mm²≤S≤700mm², 0.5mm≤D₂-D₁≤3mm; and when 700mm²≤S≤1500mm², 0.5mm≤D₂-D₁≤1.5mm.

In the above, the cross-sectional area of the first hole section 2111 is S, i.e., the area of the cross section of the first hole section 2111 perpendicular to the first direction X is S, that is, the area of a region formed by the projection of the first hole section 2111 on the outer surface of the casing 212 in the first direction X is S.

When the cross-sectional area of the first hole section 2111 is between 50mm² and 700mm², the difference between D₂ and D₁ is set between 0.5mm and 3mm, and when the cross-sectional area of the first hole section 2111 is between 700mm² and 1500mm², the difference between D₂ and D₁ is set between 0.5mm and 1.5mm. That is, when the cross-sectional area of the first hole section 2111 is different, the difference between D₂ and D₁ needs to be set cooperatively in a different range to alleviate that more material needs to be squeezed and removed during the processing of the first hole section 2111 due to too large cross-sectional area of the first hole section 2111 and too large difference between D₂ and D₁, facilitating reducing the phenomenon that the outer surface of the wall portion is partially bulged or partially squeezed to be extra wide.

In some embodiments, referring to what is shown in FIG. 9, the wall portion includes a first edge 2123a, a second edge 2123b, a third edge 2123c and a fourth edge 2123d connected in sequence, where the first edge 2123a and the third edge 2123c are provided oppositely in the width direction of the wall portion, the second edge 2123b and the fourth edge 2123d are provided oppositely in the length direction of the wall portion, and any two of the width direction of the wall portion, the length direction of the wall portion and the first direction X are perpendicular to each other. The minimum distance from the hole wall of the first hole section 2111 to the first edge 2123a is D₁, and the minimum distance from the hole wall of the second hole section 2112 to the first edge 2123a is D₂.

Exemplarily, the wall portion is the bottom wall 2123 of the casing 212. The first edge 2123a and the third edge 2123c are arranged oppositely in the width direction of the wall portion, and the second edge 2123b and the fourth edge 2123d are arranged oppositely in the length direction of the wall portion, that is, the bottom wall 2123 is in a rectangular structure formed and enclosed by the first edge 2123a, the second edge 2123b, the third edge 2123c and the fourth edge 2123d. The width direction of the wall portion is the width direction Y of the bottom wall, and the length direction of the wall portion is the length direction Z of the bottom wall. Any two of the width direction Y of the bottom wall, the length direction Z of the bottom wall, and the first direction X are perpendicular to each other.

The wall portion has a first edge 2123a, a second edge 2123b, a third edge 2123c and a fourth edge 2123d connected in sequence, with two of them arranged opposite to the other two, to form the wall portion in a rectangular structure, so that the minimum distances from the hole wall of the first hole section 2111 and the hole wall of the second hole section 2112 to the first edge 2123a of the wall portion in the width direction of the wall portion are D₁ and D₂. The wall portion in this structure facilitates processing and manufacturing of the stepped hole 211 and ensuring the manufacturing accuracy of stepped hole 211.

According to some embodiments of the present application, referring to FIG. 3 and FIG. 4, the housing 21 includes a casing 212 and an end cover 213. An accommodation space 2121 used for accommodating the electrode assembly 24 is formed inside the casing 212, one end of the casing 212 is provided with an opening 2122 communicating with the accommodation space 2121, the casing 212 has a wall portion, and the stepped hole 211 communicates with the accommodation space 2121. The end cover 213 covers the opening 2122.

In the above, the casing 212 has a wall portion, the stepped hole 211 communicates with the accommodation space 2121. That is, the stepped hole 211 is provided on the casing 212 of the housing 21, and the stepped hole 211 penetrates through two sides of the casing 212. Certainly, in other embodiments, the stepped hole 211 may also be provided on provided on the end cover 213 of the housing 21.

The stepped hole 211 is provided on the casing 212, so that the pressure relief mechanism 22 is installed on the casing 212. This structure facilitates the processing and manufacturing of the stepped hole 211, and is conductive to reducing the assembly difficulty between the pressure relief mechanism 22 and the casing 212.

According to some embodiments of the present application, referring to FIG. 6 and FIG. 7, the casing 212 includes a bottom wall 2123 and a side wall 2124. The side wall 2124 is provided surrounding the bottom wall 2123, and one end of the side wall 2124 in the first direction X defines the opening 2122, and the other end opposite to the opening 2122 is connected to the bottom wall 2123. In the above, the wall portion is the bottom wall 2123.

The wall portion is the bottom wall 2123, that is, the stepped hole 211 is provided on the bottom wall 2123 of the casing 212, and the stepped hole 211 penetrates through two sides of the bottom wall 2123 in the first direction X. Certainly, in other embodiments, the stepped hole 211 may also be provided on the side wall 2124 of the casing 212.

The stepped hole 211 is provided on the bottom wall 2123 of the casing 212 to install the pressure relief mechanism 22 on the bottom wall 2123 of the casing 212. The battery 100 in this structure, on the one hand, facilitates the battery cell 20 releasing the pressure inside the housing 21 through the pressure relief mechanism 22 during use. On the other hand, in the battery 100 with such battery cells 20, when multiple battery cells 20 are stacked into groups, the phenomenon that the high-temperature gas released by the pressure relief mechanism 22 impacts the adjacent battery cells 20 can be alleviated by providing the pressure relief mechanism 22 on the bottom wall 2123 of the casing 212, to reduce the mutual influence between the battery cells 20, which is conductive to improving the use safety of the battery 100.

According to some embodiments of the present application, the present application further provides a battery 100, including a plurality of battery cell 20 in any one of the above solutions.

In the above, referring to what is shown in FIG. 2, the battery 100 may further include a box body 10, and the plurality of battery cells 20 are accommodated in the box body 10.

According to some embodiments of the present application, the present application further provides an electrical apparatus, including at least one battery 100 in any one of the above solutions, and the battery 100 is used to provide electric energy for the electrical apparatus.

The electrical apparatus may be any aforementioned device or system using the battery 100.

According to some embodiments of the present application, referring to what is shown in FIG. 3 to FIG. 9, the present application provides a battery cell 20, where the battery cell 20 includes a housing 21, at least one electrode assembly 24, a pressure relief mechanism 22, and a protective member 23. The housing 21 includes a casing 212 and an end cover 213. The casing 212 includes a bottom wall 2123 and a side wall 2124. The side wall 2124 is provided surrounding the bottom wall 2123, and one end of the side wall 2124 in the first direction X defines the opening 2122, and the other end of the side wall opposite to the opening 2122 is connected to bottom wall 2123. The side wall 2124 and the bottom wall 2123 together define the accommodation space 2121 used for accommodating the at least one electrode assembly 24. The end cover 213 covers the opening 2122 of the casing 212. The bottom wall 2123 is provided with a stepped hole 211. The stepped hole 211 runs through two sides of the bottom wall 2123 in the first direction X. The stepped hole 211 includes a first hole section 2111, a second hole section 2112 and a third hole section 2113 whose hole diameters gradually decrease in the first direction X and which are provided continuously. The first hole section 2111 penetrates through the outer surface of the bottom wall 2123. The pressure relief mechanism 22 is provided in the second hole section 2112 and covers the third hole section 2113. The protective member 23 is provided in the first hole section 2111 and covers the second hole section 2112. In the above, in the first direction X, the depth of the first hole section 2111 is H₁, the depth of the second hole section 2112 is H₂, and the depth of the third hole section 2113 is H₃, satisfying: 0.2mm≤H₁≤0.6mm, 0.4mm≤H₂≤0.8mm and 0.3mm≤H₃≤2mm. The minimum distance from the hole wall of the first hole section 2111 to the edge of the wall portion is D₁, and the minimum distance from the hole wall of the second hole section 2112 to the edge of the wall portion is D₂, satisfying: D₁≥3mm, and 0.5mm≤D₂-D₁≤3mm.

It should be noted that, without conflict, the embodiments in the present application and the features in the embodiments may be combined with each other.

The above are only preferred embodiments of the present application, and are not intended to limit the present application. For those skilled in the art, there may be various modifications and changes in the present application. Any modifications, equivalent replacements, improvements, etc. made within the spirits and principles of the present application shall be included within the protection scope of the present application.

## Claims

1. A battery cell, comprising:
a housing, provided with a stepped hole communicating with an inside of the housing, wherein the stepped hole comprises a first hole section and a second hole section provided in a first direction, and the first hole section is located at one side of the second hole section away from the inside of the housing; and
a pressure relief mechanism and a protective member, provided in the second hole section and the first hole section respectively, wherein the protective member covers at least part of the pressure relief mechanism.

2. The battery cell according to claim 1, wherein a hole diameter of the first hole section is larger than a hole diameter of the second hole section.

3. The battery according to claim 2, wherein the stepped hole further comprises:
a third hole section, wherein the first hole section, the second hole section and the third hole section are arranged in the first direction, a hole diameter of the third hole section is smaller than the hole diameter of the second hole section, the pressure relief mechanism is provided in the second hole section and covers the third hole section, and the protective member is provided in the first hole section and covers the second hole section.

4. The battery cell according to claim 3, wherein in the first direction, a depth of the first hole section is H₁, satisfying: 0.2mm≤H₁≤0.6mm.

5. The battery cell according to claim 4, wherein a cross-sectional area of the first hole section is S, wherein when 50mm²≤S≤700mm², 0.2mm≤H₁≤0.6mm; and
when 700mm²≤S≤1500mm², 0.2mm≤H₁≤0.4mm.

6. The battery cell according to any one of claims 3 to 5, wherein in the first direction, a depth of the second hole section is H₂, satisfying: 0.4mm≤H₂≤0.8mm.

7. The battery cell according to any one of claims 3 to 6, wherein in the first direction, a depth of the third hole section is H₃, satisfying: 0.3mm≤H₃≤2mm.

8. The battery cell according to any one of claims 3 to 7, wherein the first hole section, the second hole section and the third hole section are continuously provided in the first direction.

9. The battery cell according to any one of claims 3 to 7, wherein the stepped hole further comprises:
a fourth hole section, wherein in the first direction, the fourth hole section is located between the first hole section and the second hole section, and a hole diameter of the fourth hole section is smaller than the hole diameter of the first hole section and larger than the hole diameter of the second hole section.

10. The battery cell according to claim 9, wherein in the first direction, a depth of the fourth hole section is H₄, satisfying: 0.2mm< H₄≤0.4mm.

11. The battery cell according to any one of claims 3 to 10, wherein the housing has a wall portion, the stepped hole is provided on the wall portion, and the first hole section penetrates through an outer surface of the wall portion.

12. The battery cell according to claim 11, wherein a minimum distance from a hole wall of the first hole section to an edge of the wall portion is D₁, which satisfies D₁≥3mm.

13. The battery cell according to claim 12, wherein a minimum distance from a hole wall of a hole section adjacent to the first hole section to the edge of the wall portion is D₂, which satisfies: 0.5mm≤D₂-D₁≤3mm.

14. The battery cell according to claim 13, wherein a cross-sectional area of the first hole section is S, wherein when 50mm²≤S≤700mm², 0.5mm≤D₂-D₁≤3mm; and
when 700mm²≤S≤1500mm², 0.5mm≤D₂-D₁≤1.5mm.

15. The battery cell according to claim 13 or 14, wherein the wall portion comprises a first edge, a second edge, a third edge and a fourth edge connected in sequence, wherein the first edge and the third edge are provided oppositely in a width direction of the wall portion, the second edge and the fourth edge are provided oppositely in a length direction of the wall portion, and any two of the width direction of the wall portion, the length direction of the wall portion and the first direction are perpendicular to each other; and
a minimum distance from the hole wall of the first hole section to the first edge is D₁, and a minimum distance from the hole wall of the hole section adjacent to the first hole section to the first edge is D₂.

16. The battery cell according to any one of claims 11 to 15, wherein the housing comprises:
a casing, provided therein with an accommodation space configured for accommodating at least one electrode assembly, wherein one end of the casing is provided with an opening communicating with the accommodation space, the casing has the wall portion, and the stepped hole communicates with the accommodation space; and
an end cover, covering the opening.

17. The battery cell according to claim 16, wherein the casing comprises:
a bottom wall; and
a side wall, provided surrounding the bottom wall, wherein one end of the side wall in the first direction defines the opening, and the other end thereof opposite to the opening is connected to the bottom wall,
wherein the wall portion is the bottom wall.

18. A battery, comprising a plurality of battery cells each according to any one of claims 1 to 17.

19. An electrical apparatus, comprising at least one battery each according to claim 18.
